# EUROPÄISCHE PATENTSCHRIFT

(11) **EP 2 342 844 B1**
(45) Veröffentlichungstag und Bekanntmachung des Hinweises auf die Patenterteilung: **03.09.2014**
(21) Anmeldenummer: 09779957.1
(22) Anmeldetag: 25.06.2009
(51) Int. Cl.: H04B 10/114

(54) **ELEKTRONISCHE VORRICHTUNG MIT MITTEL ZUR UNTERDRÜCKUNG VON SIGNALREFLEXIONEN EINER INTERNEN SIGNALQUELLE**
ELECTRONIC APPARATUS HAVING MEANS FOR SUPPRESSING SIGNAL REFLECTIONS OF AN INTERNAL SIGNAL SOURCE
DISPOSITIF ÉLECTRONIQUE COMPRENANT DES MOYENS POUR SUPPRIMER LES RÉFLEXIONS DE SIGNAUX D UNE SOURCE DE SIGNAUX INTERNE

(30) Priorität: 31.07.2008 DE 102008040907
(43) Veröffentlichungstag der Anmeldung: 13.07.2011
(73) Patentinhaber: Robert Bosch GmbH, 70442 Stuttgart (DE)
(72) Erfinder: LINDNER, Markus, 70180 Stuttgart (DE); GRIMM, Dietmar, 71696 Moeglingen (DE); BURKHARDT, Volker, 71139 Ehningen (DE)
(86) Internationale Anmeldenummer: PCT/EP2009/057997
(87) Internationale Veröffentlichungsnummer: WO 2010/012549

(56) Entgegenhaltungen:
- EP-A- 0 542 011
- DE-A1-102004 044 456
- US-A- 5 600 471
- US-A1- 2003 053 769
- US-A1- 2005 031 350

## Beschreibung

Die vorliegende Erfindung betrifft eine elektronische Vorrichtung, insbesondere eine zentrale Signaleinheit für ein Fahrzeug, mit einem im optischen Wellenlängenbereich arbeitenden Signalempfänger zum Empfang von Signalen einer externen Signalquelle, und einer internen, im Wesentlichen im gleichen oder benachbarten Frequenzbereich arbeitenden Signalquelle entsprechend des Oberbegriffs des Anspruchs 1.

### Stand der Technik

Die DE 195 06 723 A1 beschreibt ein Gerät der Unterhaltungselektronik mit einer Fernbedieneinheit. Um eine Audiowiedergabe mit einem vom Unterhaltungsgerät getrennt ausgebildeten Wiedergabegerät, z.B. in der Form eines Kopfhörers, zu ermöglichen, wird in dieser Schrift vorgeschlagen, zusätzlich zu einer ersten Infrarotstrecke von der Fernbedienung zum Unterhaltungsgerät eine zweite Infrarotstrecke vom Unterhaltungsgerät zur Fernbedienung vorzusehen. Der am Unterhaltungsgerät angeordnete Infrarotsender dieser zweiten Infrarotstrecke überträgt die ihm aufmodulierten Audiosignale an einen in der Fernbedienung angeordneten Infrarotempfänger, dessen Signale über eine entsprechende Schaltung aufbereitet und an eine ebenfalls an der Fernbedienung ausgebildete Kopfhörerbuchse weiterleitet.

Die DE 298 02 997 U1 beschreibt ein Audio-Wiedergabesystem mit Funkübertragung von Audiosignalen von der Audioquelle zu einem Audiowiedergabegerät und mit einem Funkrückkanal.

Infrarot-Fernbedienungen funktionieren nur bei direkter Sichtverbindung zwischen Infrarotsender und Infrarotempfänger einwandfrei. Um die Bedienung einer solchen Audioquelle mittels Infrarot-Fernbedienung auch aus anderen Positionen als bei direkter Sicht zu dem in ihm angeordneten Infrarotempfänger zu ermöglichen, wird in dieser Schrift vorgeschlagen, einen zweiten Infrarotempfänger an einem Wiedergabegerät, wie z.B. einem Lautsprecher oder einem Kopfhörer, vorzusehen, das von ihm empfangene Infrarotsignal über eine entsprechende Schaltung aufzubereiten und mittels eines einen Funksender und einen Funkempfänger umfassenden, so genannten Funkrückkanals an das Unterhaltungsgerät zu übertragen, in diesem mittels einer weiteren Schaltung das Signal erneut aufbereiten und einem weiteren, auf den ersten im Unterhaltungsgerät angeordneten Infrarotempfänger ausgerichteten, zweiten Infrarotsender aufzumodulieren und über diese weitere Infrarotstrecke das Fernbediensignal an die Audioquelle weiterzuleiten.

Ebenfalls bekannt ist die Verwendung von fernsteuerbaren, elektronischen Vorrichtungen in Fahrzeugen. Um z.B. Einsparungen in der Verdrahtung und/oder eine höhere Flexibilität in der Positionierung von mit der Vorrichtung zu verbindenden Wiedergabegeräten, wie z.B. Lautsprecher, zu ermöglichen, können auch hier drahtlose Anbindungen an das elektronische Gerät realisiert werden, z.B. ebenfalls in der Form von Infrarotstrecken.

Aus der DE 102004044456 A1 ist ein System zur optischen Datenübertragung bekannt. Um eine Datenübertragung zu gewährleisten, wird vorgeschlagen, eine kontaktlose Datenübertragung mit einem LED-Element zu verwirklichen. Hierbei wird ein Übersprechen durch Streuung bzw. Reflexion von Licht durch Partikel bzw. Gehäuseelemente verringert, wenn der Empfänger entgegen der Senderichtung zum Sender versetzt angeordnet ist.

Aus der US 5,600,471 A ist ein optisches, drahtloses Datenübertragungssystem bekannt, bei dem Störungen durch eine entsprechende Bandwahl der Transmissionsfrequenz vermieden wird.

Aus der EP 0 542 011 A1 ist eine optische Sende- und Empfangsanordnung zum Ein- und Auskoppeln von Licht in einen Lichtwellenleiter bekannt. Hierbei ist zur Verringerung von Reflexionen bekannt, den Lichtwellenleiter schräg abzuschleifen.

Aus der US 2003/0053769 A1 ist es bekannt, für eine bidirektionale optische Datenkommunikation das Licht über eine gemeinsame Linsenstruktur in einen Lichtleiter ein- und auszukoppeln.

Aus der US 2005/0031350 A1 ist eine optische Datenübertragungsstrecke bekannt.

### Aufgabe und Vorteile der vorliegenden Erfindung

Der vorliegenden Erfindung liegt die Aufgabe zugrunde, den eingangs dargelegten Stand der Technik zu verbessern.

Die Lösung dieser Aufgabe erfolgt, ausgehend von einer elektronischen Vorrichtung nach dem Oberbegriff des Anspruchs 1, durch dessen kennzeichnende Merkmale. In den Unteransprüchen sind zweckmäßige und vorteilhafte Weiterbildungen angegeben.

Dementsprechend betrifft die vorliegende Erfindung eine elektronische Vorrichtung, insbesondere eine zentrale Signaleinheit für ein Fahrzeug, mit einem im optischen Wellenlängenbereich, insbesondere im Infrarotbereich arbeitenden Signalempfänger, zum Empfang von Signalen einer externen Signalquelle, z. B. einer Fernbedienung, und mit einer internen Signalquelle, zur Abgabe von Signalen, die von Signalen der externen Signalquelle verschieden sind, wie z.B. Audiosignale. Diese Vorrichtung zeichnet sich dadurch aus, dass Unterdrückungsmittel vorgesehen sind, die verhindern, dass am Signalempfänger Störsignale entstehen, die sich aufgrund von Reflexionen von Signalen der internen Signalquelle ergeben können.

Einem solchen Vorrichtungsaufbau liegt die Erkenntnis zugrunde, dass insbesondere bei kompakt aufgebauten elektronischen Vorrichtungen, wie sie z.B. in der Form von Kombiinstrumenten für Fahrzeuge realisiert sein können, mit zwei voneinander getrennt arbeitenden, drahtlosen Übertragungskanälen Probleme bei der Auswertung von vom Empfänger detektierten Signalen auftreten. Diese können sich beispielsweise so auswirken, dass einerseits von einer externen Signalquelle, wie z.B. einer Fernsteuerung an den internen Signalempfänger gerichtete Signale nicht eindeutig erkannt werden, und/oder dass vom Signalempfänger Signale erkannt werden, und in der betreffenden elektronischen Schaltung als Steuersignale ausgewertet werden, die nicht von der zugehörigen, externen Signalquelle stammen, sondern insbesondere von der zweiten, in der elektronischen Vorrichtung angeordneten, internen Signalquelle einer zweiten drahtlosen Übertragungsstrecke, wie z.B. einer Infrarot-Audio-Übertragungsstrecke.

Als Ursache hierfür wurden insbesondere Reflexionsstrahlungen ausgemacht, die z.B. an weiteren Komponenten der elektronischen Vorrichtung zum Signalempfänger hin umgelenkt werden, wie z.B. Abdeckungen in der Form von Deckscheiben für Signalvorrichtungen oder dergleichen mehr.

Als Störsignale werden vom Signalempfänger in fälschlicher Weise generierte Signale verstanden, die aufgrund einer zur Signalgeneration ausreichend starken Einstrahlung hervorgerufen werden, insbesondere von reflektierten Signalen der internen Signalquelle. Um die Erzeugung solcher Störsignale zu verhindern, unterdrücken die Unterdrückungsmittel im Idealfall eine solche Einstrahlung von unerwünschten, insbesondere reflektierten Signalen der internen Signalquelle auf den internen Signalempfänger vollständig. Ggf. sind auch Anwendungsfälle möglich, bei denen ein gewisser Teil von reflektierten Streusignalen an den Signalempfänger durchkommt, und bei denen mit einer nicht vollständigen Verhinderung von Störsignalen ein ausreichend guten Betrieb einer betreffenden Vorrichtung möglich ist. Für jene Fälle, in denen mit einer nicht vollständigen Verhinderung von Störsignalen kein ausreichend zuverlässiger Betrieb möglich ist, können solche Störsignale z.B. durch eine dem Signalempfänger nachgeschaltete Elektronik unterdrückt werden, um so eine nicht tolerierbare, irrtümliche Ausgabe eines Signals in der Form eines Störsignals zu vermeiden.

Ein derart fälschliches Ansprechen des Signalempfängers ist insbesondere aufgrund von ggf. bis zu einem Faktor 1000 stärkerer Signale der internen Signalquelle (W/m²) im Vergleich zur Stärke der von der externen Signalquelle abgegebenen Signale (mW/m²) leicht möglich.

Da somit, je nach Anwendungsfall, oft schon die Reflexion eines geringen Teiles der von der internen Signalquelle abgestrahlten Signale ausreicht, um den ordnungsgemäßen Betrieb der den internen Signalempfänger umfassenden Funkstrecke zu stören, wird in einer bevorzugten Ausführungsform vorgeschlagen, ein Signal-Abschattelement als Mittel zur Unterdrückung von Stör- oder Streusignalen vorzusehen, die insbesondere von der internen Signalquelle her rühren.

In einer erfindungsgemäßen Ausführungsform ist vor dem Signalempfänger ein gekapselter Lichtleiter angeordnet. Als Kapselung im Sinne des vorliegenden Patentbegehrens wird hierbei insbesondere ein zur Reflexionsfläche der Abdeckung hin den Lichtleiter für den betreffenden Frequenz- bzw. Wellenlängenbereich abschirmendes Element verstanden. Dieses muss nicht zwangsläufig rund um eine Längserstreckung des Lichtleiters geschlossen sein, kann aber. Entscheidend ist eine ausreichend gute Abschirmung des Lichtleiters gegen die Einstrahlung von Fremdsignalen, insbesondere von reflektierter Sendestrahlung der internen Signalquelle.

Durch einen derart gekapselten Lichtleiter kann an dessen Einspeiseseite ein von der externen Signalquelle abgegebenes Signal aufgenommen und im Wesentlichen ohne weitere, störende Signale als sauber detektierbares Steuersignal an den Signalempfänger übertragen und von diesem fehlerfrei erkannt werden.

### Zeichnungen

Ausführungsbeispiele der Erfindungen sind in den einzelnen Zeichnungen dargestellt. Es zeigen:

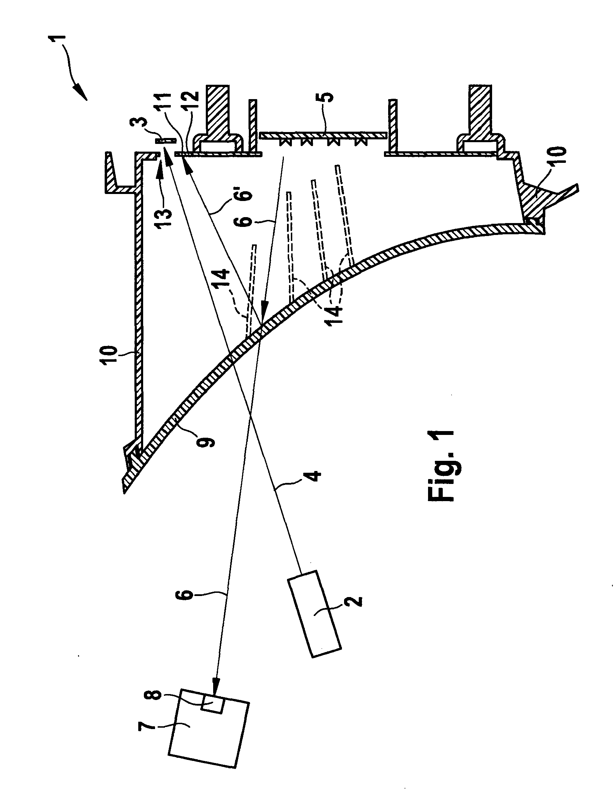

- Figuren 1 - 3: schematisch und beispielhaft eine elektronische Vorrichtung, insbesondere eine zentrale Signaleinheit für ein Fahrzeug in unterschiedlichen Ausführungsformen und Darstellungen.

Im Detail zeigt die Figur 1 eine beispielhafte Schnittdarstellung durch eine elektronische Vorrichtung 1, z.B. in der Form einer zentralen Signaleinheit für ein Fahrzeug, sowie eine externe Signalquelle 2, z.B. in der Form einer Fernsteuerung zu dessen Bedienung.

Die zentrale Signaleinheit 1 umfasst einen im optischen Wellenlängenbereich arbeitenden Signalempfänger 3 zur Detektierung von durch die Fernsteuerung 2 abgegebenen Signalen 4. Im Weiteren umfasst die zentrale Signaleinheit 1 eine interne Signalquelle 5. Diese interne Signalquelle 5 kann in einem speziellen Anwendungsfall im Wesentlichen im gleichen oder in einem unmittelbar benachbarten Wellenlängenbereich wie die externe Signalquelle arbeiten, wie z. B. 850 nm bzw. 950 nm. Möglich sind durchaus aber auch deutlich größere Abstände zwischen den beiden Basiswellenlängen.

Die von der internen Signalquelle 5 abgegebenen Signale 6 sind von den von der Fernsteuerung 2 abgegebenen Steuersignalen 4 verschieden und von der zentralen Signaleinheit abgehend ausgerichtet, um einen in einem peripheren Gerät 7 angeordneten, externen Signalempfänger 8 mit Signalen 6 zu versorgen. Beispielsweise könnten hierdurch Audiosignale 6 an einen Lautsprecher 7 zur Wiedergabe übertragen werden.

Da ein Gehäuse 10 der zentralen Signaleinheit 1 des Fahrzeugs, z.B. zum Schutz der einzelnen Komponenten, eine Abdeckung 9 aufweist, z.B. in der Form einer Deckscheibe für Anzeigeinstrumente, müssen die von der internen Signalquelle 5 abgestrahlten Signale 6 die Deckscheibe 9 durchdringen, so dass dabei ein Teil der Strahlung zurück ins Innere der Signaleinheit 1 als Reflexionssignal 6' unter anderem in Richtung zum internen Signalempfänger 3 hin reflektiert wird.

Um eine Einstrahlung dieser reflektierten Signale 6' auf die interne Signalquelle 3 zu unterdrücken, sind erfindungsgemäß Unterdrückungsmittel 11 vorgesehen, die in der nicht zur Erfindung gehörenden Ausführungsform in der Figur 1 als blendenartige Elemente 12, z.B. in der Form wandartiger Abschattmittel 12 ausgebildet und in einem geeigneten Abstand vor dem internen Signalempfänger so angeordnet sind, dass dieser nicht mehr von der reflektierten Strahlung 6' beaufschlagt werden kann.

In dem hier dargestellten nicht zur Erfindung gehörenden Beispiel begrenzt dieses in der Form einer Wand 12 ausgebildete Signal-Abschattelement eine Öffnung 13, die in einer einen Signalkegel selektierenden Weise einen direkten Sichtkontakt zwar zur Fernbedienung 2 hin ermöglicht, einen solchen für an der Abdeckung 9 reflektierte Streustrahlung 6' jedoch zuverlässig abschattet.

Als weitere nicht zur Erfindung gehörende Ausführungsform eines Signal-Abschattelements 12 sind vier Rippen 14 als gestrichelte Linien dargestellt.

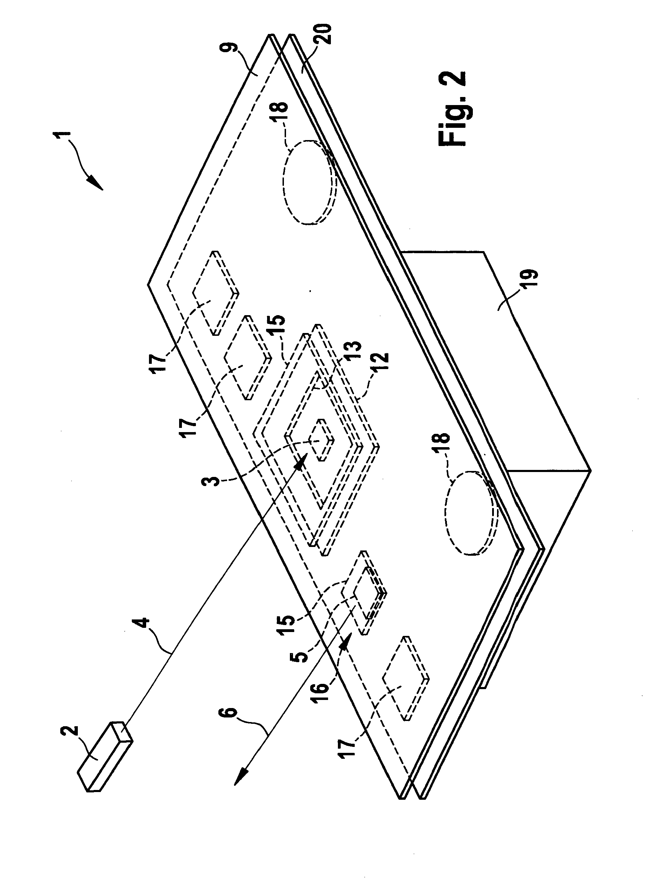

Die Figur 2 zeigt ebenfalls eine nicht zur Erfindung gehörende Ausführungsform, bei welcher die zentrale Signaleinheit 1 für ein Fahrzeug einen optischen Filter 15 umfasst.

Durch eine entsprechende geometrische Anordnung kann hierbei eine selektive Optik für gleichfrequente Signale realisiert werden, indem z.B. die Abstrahlcharakteristik der internen Signalquelle 5 durch die Wahl eines entsprechenden Durchlassbereiches und/oder eines entsprechenden Abstandes zwischen einem solchen "Durchlassfenster" 16 und der Abstrahloberfläche der internen Signalquelle 5 entsprechend variiert wird.

In der perspektivischen Draufsicht auf die zentrale Signaleinheit 1 in der Figur 2 ist als großflächige, obere Schicht die Abdeckung 9 dargestellt, leicht beabstandet von einer Rückwand 20, an und/oder in welcher weitere Signalelemente 17, 18 beispielhaft und symbolisch dargestellt sind. Von der Blickrichtung auf die Abdeckung 9 gesehen hinter der Rückwand 20 kann eine Kontrolleinheit 19 zur Aufbereitung und/oder Anzeige verschiedenster Signale angeordnet sein kann.

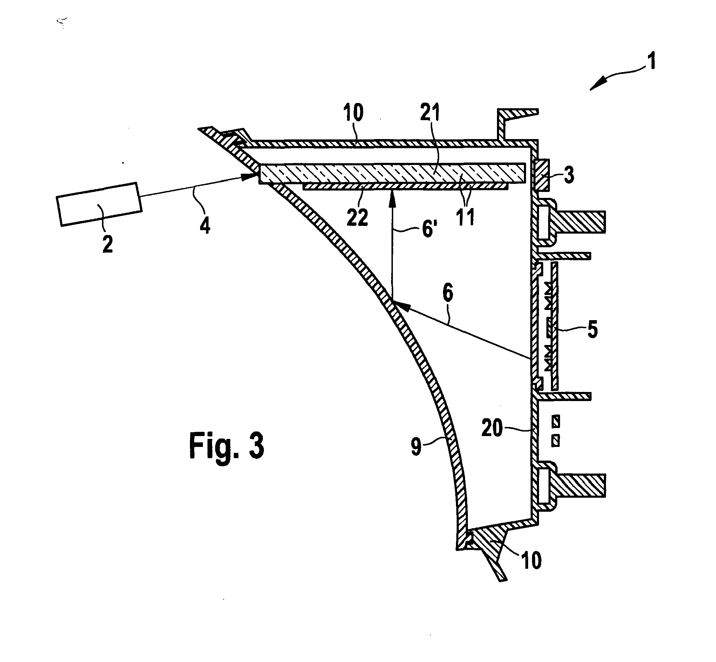

Die Figur 3 zeigt erfindungsgemäß eine Ausführungsform einer Signaleinheit 1 für ein Fahrzeug. Hier umfassen die Mittel 11 zur Unterdrückung einer Einstrahlung von von der internen Signalquelle 5 abgegebener und an der Abdeckung 9 reflektierter Streusignale 6' an den internen Signalempfänger 3 einen mit einer Kapselung 22 versehenen Lichtleiter 21.

Der Lichtleiter 21 ist durch eine hier beispielhaft und symbolisch als Balken 22 dargestellte Kapselung 22 nach innen gegen insbesondere an der reflektierenden Oberfläche der Abdeckung 9 reflektierter Signale abgeschirmt. Die Kapselung 22 kann den Lichtleiter 21 z.B. in seiner Längserstreckung im Wesentlichen voll umschließen, dies ist jedoch nicht zwingend erforderlich. So kann beispielsweise auch eine flächige Abdeckung wenigstens in einstrahlungskritischen Bereichen bereits eine ausreichende Abschattung des internen Signalempfängers 3 bewirken.

Durch eine derartige Ausblendung der Reflexionsstrahlen 6' können die von der Fernbedienung 2 abgegebenen Signale 4 im Wesentlichen ohne Überlagerung mit Streusignalen an den internen Signalempfänger 3 übermittelt werden, so dass der Signalempfänger 3 sie korrekt detektieren und die ihm nachgeschaltete Logikeinheit die so übermittelten Steuerbefehle störungsfrei ausführen kann.

Insbesondere kann auch die Abdeckung 9 zumindest in dem Bereich und zumindest für die Wellenlänge der internen Signalquelle 5 besonders transluzent ausgebildet sein, in welchem eine Signalstrahlung zu entsprechenden externen Empfängern 8 abgestrahlt werden soll. Möglich ist aber auch ein zumindest im Einstrahlbereich zum internen Signalempfänger besonders für den betreffenden Empfangs-Wellenlängenbereich transluzenter Aufbau der Abdeckung.

## Patentansprüche

1. Elektronische Vorrichtung (1), die als eine zentrale Signaleinheit für ein Fahrzeug ausgebildet ist, mit einem im optischen Wellenlängenbereich, insbesondere im Infrarotbereich, arbeitenden Signalempfänger (3), zum Empfang von Signalen (4) einer externen Signalquelle (2), mit einer internen Signalquelle (5), zur Abgabe von Signalen (6), die von Signalen (4) der externen Signalquelle (2) verschieden sind, und mit Unterdrückungsmitteln (11), die verhindern, dass am Signalempfänger (3) Störsignale entstehen, die sich aufgrund von Reflexionen von Signalen der internen Signalquelle (5) ergeben können, **dadurch gekennzeichnet, dass** als Unterdrückungsmittel vor dem Signalempfänger (3) ein gekapselter Lichtleiter (21) derart angeordnet ist, dass die Einstrahlung von von der internen Signalquelle (5) der elektronischen Vorrichtung (1) abgegebenen und an einer Abdeckung (9) der elektronischen Vorrichtung (1) reflektierten Strahlung unterdrückt wird.

2. Elektronische Vorrichtung nach Anspruch 1, **dadurch gekennzeichnet, dass** die Kapselung den Lichtleiter (21) in seiner Längserstreckung im Wesentlichen voll umschließt.

3. Elektronische Vorrichtung nach einem der vorangehenden Ansprüche, **dadurch gekennzeichnet, dass** die Abdeckung (9) besonders für die Wellenlänge der von der internen Signalquelle (5) abgegebenen Strahlung transluzent ausgebildet ist, insbesondere in einem Bereich, den ein für eine Signalabstrahlung vorgesehener Strahlenkegel überdeckt.

## Claims

1. Electronic apparatus (1), which is designed as a central signal unit for a vehicle, having a signal receiver (3) operating in the optical wavelength region, in particular in the infrared region, for receiving signals (4) of an external signal source (2), having an internal signal source (5) for outputting signals (6) which differ from signals (4) of the external signal source (2), and having suppressing means (11) which prevent the production at the signal receiver (3) of interference signals which can be produced because of reflections of signals of the internal signal source (5), **characterized in that** an encapsulated optical fibre (21) is arranged as suppressing means upstream of the signal receiver (3) in such a way as to suppress the irradiation of radiation output by the internal signal source (5) of the electronic apparatus (1) and reflected at a cover (9) of the electronic apparatus (1).

2. Electronic apparatus (1) according to Claim 1, **characterized in that** the encapsulation essentially completely surrounds the optical fibre (21) along the extent of its length.

3. Electronic apparatus according to one of the preceding claims, **characterized in that** the cover (9) is designed to be translucent, in particular for the wavelength of the radiation output by the internal signal source (5), particularly in a region which covers a beam cone provided for signal emission.

## Revendications

1. Dispositif électronique (1) réalisé sous forme d'unité de signaux centrale pour un véhicule, comprenant un capteur de signaux (3) fonctionnant dans la plage de longueurs d'ondes optiques, en particulier dans la plage infrarouge, pour recevoir des signaux (4) d'une source de signaux externe (2), comprenant une source de signaux interne (5), pour délivrer des signaux (6) qui sont différents des signaux (4) de la source de signaux externe (2), et comprenant des moyens de suppression (11) qui empêchent la formation de signaux parasites au niveau du capteur de signaux (3) qui pourraient résulter de réflexions de signaux de la source de signaux interne (5), **caractérisé en ce que** l'on dispose en tant que moyen de suppression avant le capteur de signaux (3) un guide de lumière encapsulé (21) de telle sorte que l'irradiation du rayonnement délivré par la source de signaux interne (5) du dispositif électronique (1) et réfléchi au niveau d'un recouvrement (9) du dispositif électronique (1) soit supprimée.

2. Dispositif électronique selon la revendication 1, **caractérisé en ce que** l'encapsulation entoure essentiellement complètement le guide de lumière (21) dans son étendue longitudinale.

3. Dispositif électronique selon l'une quelconque des revendications précédentes, **caractérisé en ce que** le recouvrement (9) est réalisé en particulier sous forme translucide pour la longueur d'onde du rayonnement délivré par la source de signaux interne (5), en particulier dans une région recouverte par un cône de rayonnement prévu pour une émission de signaux.
